(19) Europäisches Patentamt
European Patent Office
Office européen des brevets

(11) **EP 4 328 082 B1**

(12) **EUROPEAN PATENT SPECIFICATION**

(45) Date of publication and mention
of the grant of the patent:
**14.01.2026 Bulletin 2026/03**

(21) Application number: **22810183.8**

(22) Date of filing: **29.03.2022**

(51) International Patent Classification (IPC):
**B60L 58/12** $^{(2019.01)}$    **B60L 3/12** $^{(2006.01)}$
**G05B 19/042** $^{(2006.01)}$

(52) Cooperative Patent Classification (CPC):
**B60L 58/12;** B60K 2360/169; B60L 2250/16;
B60L 2260/50; B60L 2260/52; B60L 2260/54;
G05B 19/042; Y02T 10/70

(86) International application number:
**PCT/CN2022/083865**

(87) International publication number:
**WO 2022/247450 (01.12.2022 Gazette 2022/48)**

(54) **METHOD AND APPARATUS FOR DETERMINING DRIVING RANGE OF ELECTRIC VEHICLE, AND VEHICLE**

VERFAHREN UND VORRICHTUNG ZUR BESTIMMUNG DER REICHWEITE EINES ELEKTROFAHRZEUGS UND FAHRZEUG

PROCÉDÉ ET APPAREIL POUR DÉTERMINER UNE PLAGE DE CONDUITE D'UN VÉHICULE ÉLECTRIQUE, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.05.2021 CN 202110567337**

(43) Date of publication of application:
**28.02.2024 Bulletin 2024/09**

(73) Proprietor: **Great Wall Motor Company Limited Hebei 071000 (CN)**

(72) Inventors:
• **WANG, Bin**
  **Baoding, Hebei 071000 (CN)**
• **WANG, Shaochong**
  **Baoding, Hebei 071000 (CN)**
• **QIAO, Kai**
  **Baoding, Hebei 071000 (CN)**

(74) Representative: **Klunker IP Patentanwälte PartG mbB Destouchesstraße 68 80796 München (DE)**

(56) References cited:
CN-A- 109 050 262     CN-A- 109 254 544
CN-A- 110 015 132     CN-A- 111 619 356
KR-A- 20190 122 404   US-A1- 2012 116 606
US-A1- 2014 005 855   US-A1- 2016 375 782
US-A1- 2016 375 782

**Description**

TECHNICAL FIELD

The present invention relates to the technical field of vehicle controlling, and particularly relates to a method and apparatus for determining a driving range of an electric vehicle, and a vehicle.

BACKGROUND

Because of the lower affection on the environment and the lower usage cost than traditional vehicles, electric vehicles are increasingly more popular, and more users are choosing electric vehicles for travelling. In order to enable the users to plan the route and the path in advance, to prevent the travelling demand from being affected by electric-quantity exhaustion, the driving range of the electric vehicles has become important information that the users require referring to in travelling.

In the determination of the driving range of the electric vehicle, the initial driving range that is displayed by the electric vehicle is one of the important parameters. Currently, the conventional methods for estimating the initial driving range generally use the value of the stored actual remaining driving range or use the driving-range value calculated in real time as the initialized value. Neither of the two methods can accurately display the real remaining driving range value, which causes that the estimation of the driving range of the electric vehicle is inaccurate.

US 2016/375782 A1 shows an electric vehicle driving range optimization system with dynamic feedback.

US 2012/116606 A1 shows a range display apparatus including a range calculator, an amount-of-consumption calculator, a remaining-amount-of-electricity calculator, a full-charge detector, an average mileage calculator, an instantaneous mileage calculator, a current possible range calculator, an instantaneous possible range calculator, a current total range calculator, an instantaneous total range calculator, a storage device, and a display. The current total range calculator is configured to calculate a current total range. The instantaneous total range calculator is configured to calculate an instantaneous total range. The storage device is configured to store the current total range calculated by the current total range calculator when the full-charge detector has detected a full charge as a past total range. The display is configured to display the current total range, the instantaneous total range, and the past total range.

KR 2019 0122404 A shows an estimating apparatus of distance to empty of an electric vehicle, and a method thereof. The estimating apparatus of distance to empty (DTE) of an electric vehicle comprises: a DTE calculation unit for calculating a state of energy (SOE)-based DTE representing the SOE-based DTE; a DTE correction value calculating unit for calculating a DTE correction value representing the distance to empty corresponding to an auxiliary energy consumption used by additional devices of the electric vehicle; and a DTE correction unit for correcting the SOE-based DTE in consideration of the DTE correction value.

SUMMARY

An object of the present disclosure is to provide a method and apparatus for determining a driving range of an electric vehicle, and a vehicle comprising the apparatus, to increase the accuracy of the initial display driving range, and improve the usage experience of the electric vehicle by the user.

The object is achieved with the features of claim 1 regarding the method for determining a driving range of an electric vehicle, and with the features of claim 8 regarding the apparatus for determining a driving range of an electric vehicle. Further embodiments are defined in the dependent claims. driving range

By using the above technical solutions, in the process of determining the driving range of the electric vehicle, after the electric vehicle is powered on, the initial display driving range is corrected. Particularly, if the difference between the current SOE value calculated at the powering-on of this time and the SOE value stored before the powering-off of last time exceeds the preset difference range, the initial display driving range is determined according to the current SOE value, or else the actual remaining driving range stored before the powering-off of last time of the electric vehicle is determined to be the initial display driving range. Accordingly, the preset difference range is introduced into the process of determining the initial display driving range, and the accurate value is given according to the state of the electric vehicle, to positively combine the historical record and the real-time calculation result, which can increase the accuracy of the initial display driving range, and improve the usage experience of the electric vehicle by the user.

Some of the additional aspects and advantages of the present invention will be given in the following description, and some will become apparent from the following description or be known from the implementation of the present invention which is defined in the claims.

BRIEF DESCRIPTION OF THE DRAWINGS

The above and/or additional aspects and advantages of the present invention will become apparent and readily understandable from the following description with reference to the drawings. In the drawings:

FIG. 1 is a flow chart of a method for determining a driving range of an electric vehicle;
FIG. 2 is a flow chart of a method for determining a driving range of an electric vehicle;
FIG. 3 is a flow chart of a method for determining a driving range of an electric vehicle;
FIG. 4 is a flow chart of a method for determining a driving range of an electric vehicle;
FIG. 5 is a flow chart of a method for determining a driving range of an electric vehicle;
FIG. 6 is a block diagram of an apparatus for determining a driving range of an electric vehicle;
FIG. 7 is a block diagram of a controller;
FIG. 8 is a schematic structural diagram of a computing and processing device; and
FIG. 9 is a schematic diagram of a portable or fixed storage unit for a program code for implementing the method for determining a driving range of an electric vehicle.

DETAILED DESCRIPTION

The present invention will be described in detail below. In the drawings, the same or similar reference numbers throughout the drawings indicate the same or similar elements or elements having the same or similar functions.
The method and apparatus for determining a driving range of an electric vehicle will be described below with reference to the drawings.

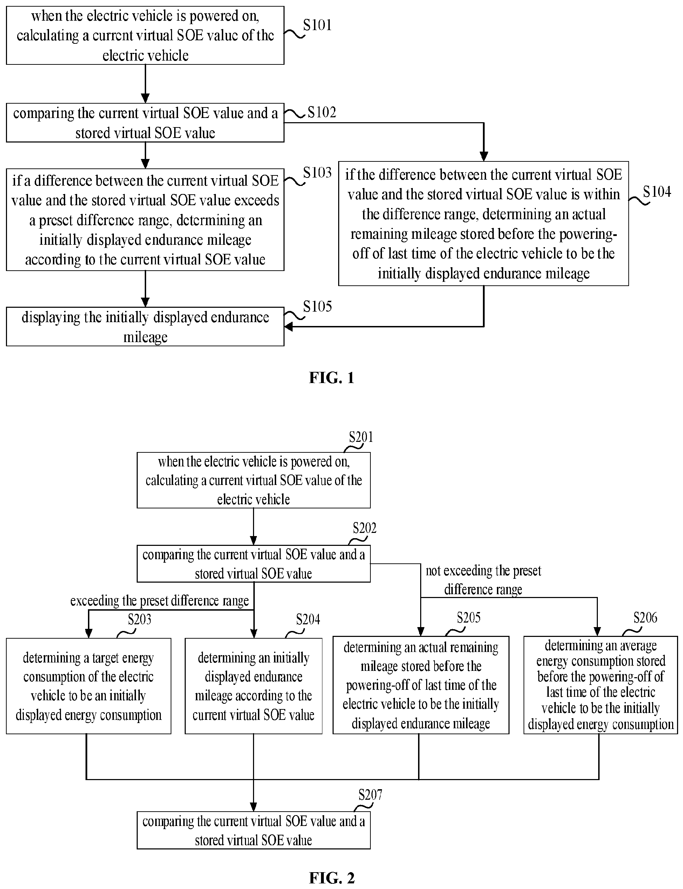

FIG. 1 is a flow chart of a method for determining a driving range of an electric vehicle. The method may be applied to a vehicle, for example, the controlling components inside the vehicle, for example, a vehicle-body controller, an entire-vehicle controller and a battery managing system. As shown in FIG. 1, the method may include S101 to S105.
S101: when the electric vehicle is powered on, calculating a current SOE value of the electric vehicle.
The SOE value is an SOE value that is obtained by calculation according to the remaining-battery-electric-quantity percentage, the battery health degree, the battery-electric-quantity theoretical value and the cell temperature coefficient of the battery pack of the electric vehicle, wherein the particular calculating mode is as follows:

The SOE=SOC*SOH*the cell temperature coefficient of the battery pack*the battery-electric-quantity theoretical value,
wherein SOC (state of charge) refers to the remaining-battery-electric-quantity percentage, and SOH (state of health) refers to the battery health degree, i.e., the percentage of the current capacity of the battery to the factory capacity.

S102: comparing the current SOE value and a stored SOE value, wherein the stored SOE value refers to a SOE value that is stored before powering-off of last time of the electric vehicle.
The electric vehicle, before each time of powering-off, stores the current actual remaining driving range, the average energy consumption and the SOE value of the electric vehicle into the bottom layer of the controller. When the electric vehicle is powered on again, the SOE value stored before the powering-off of last time is invoked, and, according to the result of the comparison between the current SOE value and the stored SOE value, the initial display driving range is determined.
S103: if a difference between the current SOE value and the stored SOE value exceeds a preset difference range, determining an initial display driving range according to the current SOE value.
That the difference exceeds the preset difference range refers to that the difference is greater than the upper limit value of the difference range and that the difference is less than the lower limit value of the difference range.
If the difference between the current SOE value and the stored SOE value exceeds the preset difference range, that indicates that the current state of the electric vehicle and the state before the powering-off have a large difference therebetween. By using the current SOE value to determine the initial display driving range, the error caused by invoking the actual remaining driving range stored before the powering-off of last time of the electric vehicle can be prevented, to cause the initial display driving range to be more accurate.
S104: if the difference between the current SOE value and the stored SOE value is within the difference range, determining an actual remaining driving range stored before the powering-off of last time of the electric vehicle to be the initial display driving range.
That the difference is within the difference range refers to that the difference is less than or equal to the upper limit value of the difference range and is greater than or equal to the lower limit value of the difference range.
If the difference between the current SOE value and the stored SOE value is within the difference range, that indicates that the current state of the electric vehicle and the state before the powering-off are substantially the same. By determining the actual remaining driving range stored before the powering-off of last time of the electric vehicle to be the initial display driving range, the requirement on the accuracy of the initial display driving range can be satisfied.

S105: displaying the initial display driving range.

As an example, it may be displayed by a displaying component inside the vehicle. The displaying component includes but is not limited to a dashboard, a display screen of the vehicle computer, and a display screen of another external electronic device that communicates with the vehicle.

By using the above technical solutions, in the process of determining the driving range of the electric vehicle, after the electric vehicle is powered on, the initial display driving range is corrected. Particularly, if the difference between the current SOE value calculated at the powering-on of this time and the SOE value stored before the powering-off of last time exceeds the preset difference range, the initial display driving range is determined according to the current SOE value, or else the actual remaining driving range stored before the powering-off of last time of the electric vehicle is determined to be the initial display driving range. Accordingly, the preset difference range is introduced into the process of determining the initial display driving range, and the accurate value is given according to the state of the electric vehicle, to positively combine the historical record and the real-time calculation result, which can increase the accuracy of the initial display driving range, and improve the usage experience of the electric vehicle by the user.

In order to enable the user to plan the route and the path better, to prevent inconvenience caused by electric-quantity exhaustion, and improve the user experience, in the usage of the electric vehicle, the average energy consumption is also used as an important parameter that the user requires referring to in travelling.

FIG. 2 is a flow chart of a method for determining a driving range of an electric vehicle according to another illustrative embodiment of the present disclosure. As shown in FIG. 2, the method may include S201 to S207.

S201: when the electric vehicle is powered on, calculating a current SOE value of the electric vehicle.

S202: comparing the current SOE value and a stored SOE value.

If the difference between the current SOE value and the stored SOE value exceeds the preset difference range, then S203 and S204 are executed.

S203: determining a target energy consumption of the electric vehicle to be an initial display energy consumption.

The target energy consumption is the ratio of the theoretical value of the electric quantity of the power battery to the maximum driving range of the electric vehicle, i.e., the target energy consumption=the theoretical value of the electric quantity of the power battery/the maximum driving range of the electric vehicle, and may be set by using the result of the experimentation on the electric vehicles of the same vehicle model.

S204: determining an initial display driving range according to the current SOE value.

If the difference between the current SOE value and the stored SOE value is within the difference range, then S205 and S206 are executed.

S205: determining an actual remaining driving range stored before the powering-off of last time of the electric vehicle to be the initial display driving range.

S206: determining an average energy consumption stored before the powering-off of last time of the electric vehicle to be the initial display energy consumption.

S207: displaying the initial display driving range and the initial display energy consumption.

As well known by a person skilled in the art, there are multiple modes for calculating the average energy consumption. In an illustrative embodiment according to the present disclosure, in order to increase the accuracy of the calculation on the average energy consumption, the average energy consumption may be calculated by using the method of the iteration of the average energy consumption of n unit segments (for example, n=30). The distance of each of the unit segments is Skm, it is calculated that the energy consumed by the travelling by Skm is SumEDrv (the integral value of the actual discharging power of the battery), the ratio of the travelling consumed energy SumEDrv to the distance Skm is determined to be the calculated average travelling energy consumption $AvgE_n$ of the segment of road with the unit of kw·h/km, and the average energy consumption AvgE of the travelling of the electric vehicle is written into the iteration form, i.e.:

$$AvgE = (a_1*AvgE_1+a_2*AvgE_2+\ldots+a_{n-1}*AvgE_{n-1}+a_n*AvgE_n)/n$$

The parameters $a_1$, $a_2$, ..., $a_{n-1}$ and $a_n$ are the weight coefficients of the average energy consumptions of the segments, wherein the segment that has a higher distance has a lower weight. The weight coefficients are values that are verified and calibrated by using real vehicles, wherein $a_1+a_2+\ldots+a_{n-1}+a_n=n$.

According to the above technical solution, the average energy consumption is set to be an important parameter that the user requires referring to in travelling. In the usage of the electric vehicle, based on whether the difference between the current SOE value calculated at the powering-on of this time and the SOE value stored before the powering-off of last time exceeds the preset difference range, the initial display energy consumption is determined, in which the target energy consumption is introduced, to prevent the problem of inaccuracy of the initial display energy consumption caused by an excessively large difference between the stored average energy consumption and the actual average energy consumption, which can increase the accuracy of the initial display energy consumption, and further improve the usage experience of the electric vehicle by the user.

The step of determining the initial display driving range according to the current SOE value includes determining the initial display driving range according to the ratio of the current SOE value to the target energy consumption of the electric vehicle. For example, the initial display driving range=the current SOE value/the target energy consumption.

In the practical usage of the electric vehicle, besides the initial display driving range and the initial display energy consumption, the driving ranges of the electric vehicle that are displayed in the stationary state, the travelling state and the charging state are also important for the user to refer to in travelling.

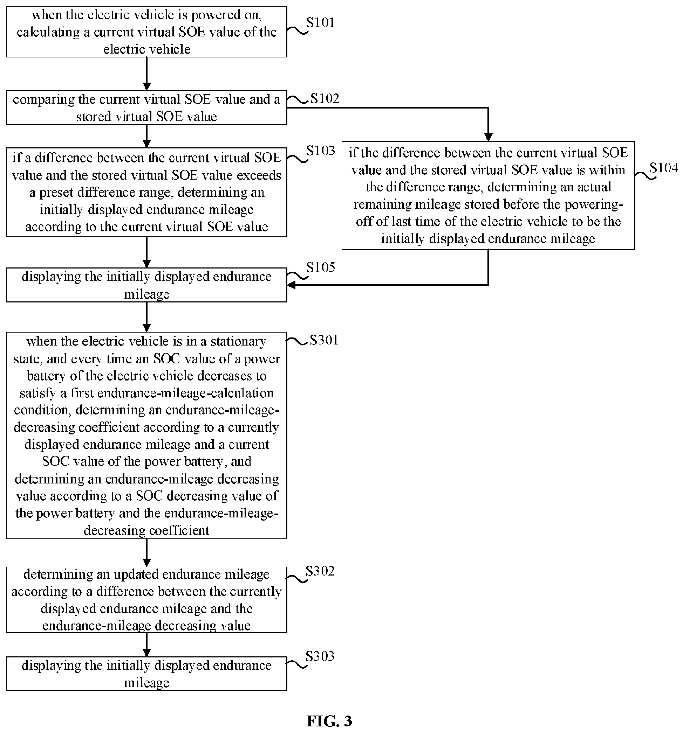

FIG. 3 is a flow chart of a method for determining a driving range of an electric vehicle according to another illustrative embodiment of the present disclosure. As shown in FIG. 3, after the electric vehicle is powered on, the method may further include:

S301: while the electric vehicle is in a stationary state, every time an SOC value of a power battery of the electric vehicle decreases to satisfy a first driving-range-calculation condition, according to a currently displayed driving range and a current SOC value of the power battery, determining an driving-range-decreasing coefficient, and according to an SOC decreasing value of the power battery and the driving-range-decreasing coefficient, determining an driving-range decreasing value, wherein the SOC decreasing value refers to a decreasing value, as compared with the SOC value when the power battery satisfies the first driving-range-calculation condition last time, of the SOC value when the power battery satisfies the first driving-range-calculation condition this time.

As an example, the first driving-range-calculation condition may be that the SOC value of the power battery decreases by a first preset proportion. The first preset proportion is, for example, 0.05%. In other words, every time the SOC value decreases by 0.05%, the driving-range-decreasing coefficient of the vehicle in the stationary state is updated one time, and the displayed driving range is updated, to ensure that the user can acquire the updated driving range in real time. In another embodiment, the first driving-range-calculation condition may also be that the SOC value of the power battery decreases by a preset threshold.

As an example, the step of, according to the currently displayed driving range and the current SOC value of the power battery, determining the driving-range-decreasing coefficient may include: according to the ratio of the currently displayed driving range to the current SOC value of the power battery, determining the driving-range-decreasing coefficient. For example, the driving-range-decreasing coefficient=the currently displayed driving range/the current SOC value.

As an example, the step of, according to the SOC decreasing value of the power battery and the driving-range-decreasing coefficient, determining the driving-range decreasing value may include: according to the product between the SOC decreasing value of the power battery and the driving-range-decreasing coefficient, determining the driving-range decreasing value. For example, the driving-range decreasing value=the SOC decreasing value × the driving-range-decreasing coefficient.

S302: according to a difference between the currently displayed driving range and the driving-range decreasing value, determining an updated driving range. As an example, the updated driving range=the currently displayed driving range-the driving-range decreasing value.

S303: displaying the updated driving range, to replace the previously displayed driving range.

According to the above technical solution, while the electric vehicle is in a stationary state, filtering calculation is performed to the driving range, and according to the ratio of the currently displayed driving range to the current SOC value of the power battery, the decreasing coefficient is determined in real time, to be used to determine the value of the updated driving range, which can increase the accuracy of the driving range acquired by the user, and further improve the usage experience of the electric vehicle by the user.

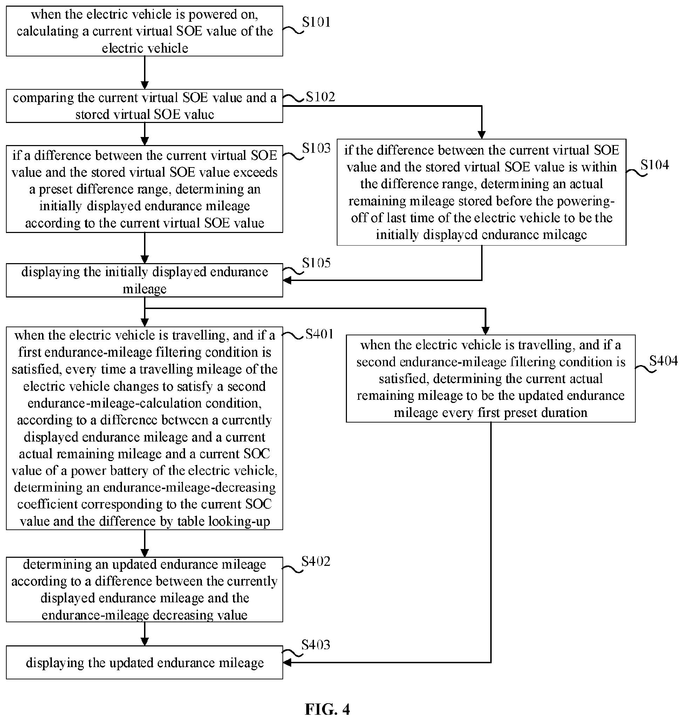

FIG. 4 is a flow chart of a method for determining a driving range of an electric vehicle according to another illustrative embodiment of the present disclosure. As shown in FIG. 4, after the electric vehicle is powered on, the method may further include:

S401: while the electric vehicle is travelling, if a first driving-range filtering condition is satisfied, every time a driving range of the electric vehicle changes to satisfy a second driving-range-calculation condition, according to a difference between a currently displayed driving range and a current actual remaining driving range and a current SOC value of a power battery of the electric vehicle, determining, by looking-up a table, an driving-range-decreasing coefficient corresponding to the current SOC value and the difference, wherein the current actual remaining driving range is determined in real time based on the current SOE value and a current average energy consumption; and according to a driving range variation value of the electric vehicle and the driving-range-decreasing coefficient, determining an driving-range decreasing value, wherein the driving range variation value refers to a variation value, as compared with the driving range when the electric vehicle satisfies the second driving-range-calculation condition last time, of the driving range when the electric vehicle satisfies the second driving-range-calculation condition this time.

As an example, the first driving-range filtering condition may include:

that the current SOC value of the power battery is less than a preset SOC threshold; or
that the current SOC value of the power battery is greater than or equal to the SOC threshold, and the currently displayed driving range is greater than the current actual remaining driving range; or
that the current SOC value of the power battery is greater than or equal to the SOC threshold, and the SOC value of the power battery is decreasing.

As an example, the second driving-range-calculation condition may be that the driving range increases by a preset distance. For example, the preset distance may be set to be 1km. In other words, when the vehicle is in the travelling state, every time it has travelled by 1km, according to the difference between the currently displayed driving range and the current actual remaining driving range and the current SOC value of the power battery of the electric vehicle, the driving-range-decreasing coefficient corresponding to the current SOC value and the difference is determining by a looking-up a table, and the displayed driving range is updated accordingly, to ensure that the user can acquire the updated driving range in real time. In another embodiment, the second driving-range-calculation condition may also be that the driving range increases by a second preset proportion.

As an example, the actual remaining driving range of the vehicle is determined based on the SOE value and the average energy consumption of the vehicle. For example, the actual remaining driving range=the SOE value/the average energy consumption.

As an example, because different driving habits and the complexity of road conditions, the driving range varies. It might be the case that, after travelling by 0.5km, the displayed driving range decreases by 1km. On the contrary, it might be the case that, after travelling by 1.5km, the displayed driving range has merely decreased by 1km. A data table may be calibrated in advance by using experimental data, wherein the data table records the correspondence relation among the three parameters of the difference between the displayed driving range and the actual remaining driving range, the SOC value of the power battery, and the driving-range-decreasing coefficient. Accordingly, S401 may include, according to the difference between the currently displayed driving range and the current actual remaining driving range and the current SOC value of the power battery of the electric vehicle, by looking up the data table, determining the driving-range-decreasing coefficient corresponding to the current SOC value and the difference.

After the driving-range-decreasing coefficient is determined, according to the driving range variation value of the electric vehicle and the driving-range-decreasing coefficient, the driving-range decreasing value is determined. As an example, according to the ratio of the driving range variation value of the electric vehicle to the driving-range-decreasing coefficient, the driving-range decreasing value is determined. For example, the driving-range decreasing value=the driving range variation value/the driving-range-decreasing coefficient.

S402: according to a difference between the currently displayed driving range and the driving-range decreasing value, determining an updated driving range. As an example, the updated driving range=the currently displayed driving range-the driving-range decreasing value.

S403: displaying the updated driving range, to replace the previously displayed driving range.

According to the above technical solution, while the electric vehicle is in the travelling state, filtering calculation is performed to the driving range, if the first driving-range filtering condition is satisfied, according to the difference between the currently displayed driving range and the current actual remaining driving range and the current SOC value of the power battery of the electric vehicle, the driving-range-decreasing coefficient is determined in real time by a lookup table, and the value of the updated driving range is accordingly determined, which can increase the accuracy of the driving range acquired by the user, and further improve the usage experience of the electric vehicle by the user.

In an alternative embodiment, as shown in FIG. 4, after the electric vehicle is powered on, the method may further include:

S404: while the electric vehicle is travelling, if a second driving-range filtering condition is satisfied, every first preset duration, determining the current actual remaining driving range to be the updated driving range, and subsequently executing the step S403.

The second driving-range filtering condition may include that the current SOC value of the power battery is greater than or equal to the SOC threshold, the SOC value of the power battery is increasing, and the currently displayed driving range is less than the current actual remaining driving range. As an example, when temperature rise of the power battery of the electric vehicle or sliding of the electric vehicle results in energy recovery, at this point the SOC value of the power battery increases.

As an example, the first preset duration may be set to be 100ms. In other words, when the electric vehicle is in the travelling state, if the second driving-range filtering condition is satisfied, every time the time interval has reached 100ms, the displayed driving range is updated to be the current actual remaining driving range, to ensure that the user can acquire the updated driving range in real time.

According to the above technical solution, while the electric vehicle is in the travelling state, filtering calculation is performed to the driving range, and if the second driving-range filtering condition is satisfied, every first preset duration, the current actual remaining driving range is determined to be the updated driving range, which prevents the problem that, when the SOC value of the power battery increases, because the updated driving range is inaccurate, the user cannot plan the route better.

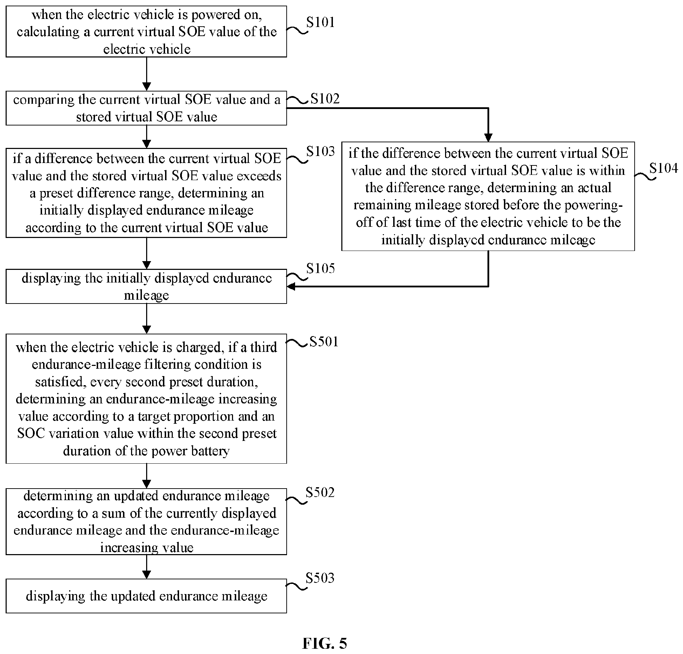

FIG. 5 is a flow chart of a method for determining a driving range of an electric vehicle according to another illustrative embodiment of the present disclosure. As shown in FIG. 5, after the electric vehicle is powered on, the method may further include:

S501: while the electric vehicle is charged, if a third driving-range filtering condition is satisfied, every second preset duration, according to a target proportion and an SOC variation value within the second preset duration of the power battery, determining an driving-range increasing value, wherein the target proportion refers to a ratio of a difference between a maximum driving range of the electric vehicle and the currently displayed driving range to a difference between the SOC value of the power battery when the power battery has a full electric quantity and the current SOC value of the power battery. In other words, the target proportion = (the maximum driving range of the electric vehicle-the currently displayed driving range) / (the SOC value of the power battery when the power battery has the full electric quantity-the current SOC value of the power battery).

As an example, the third driving-range filtering condition may include that the current SOC value of the power battery does not reach the SOC value of the power battery when the power battery has a full electric quantity, or that the currently displayed driving range does not reach the maximum driving range of the electric vehicle.

As an example, the numerical value of the second preset duration may be equal to or unequal to the numerical value of the first preset duration. For example, the second preset duration may be set to be 100ms. In other words, when the electric vehicle is in the travelling state, if the third driving-range filtering condition is satisfied, every time the time interval has reached 100ms, according to the product between the target proportion and the SOC variation value within the 100ms of the power battery, the driving-range increasing value is determined, and the updated driving range is accordingly determined, to ensure that the user can acquire the updated driving range in real time.

As an example, the step of, according to the target proportion and the SOC variation value within the second preset duration of the power battery, determining the driving-range increasing value may include: according to the product between the target proportion and the SOC variation value within the second preset duration of the power battery, determining the driving-range increasing value. For example, the driving-range increasing value=the SOC variation value × the target proportion.

S502: according to a sum of the currently displayed driving range and the driving-range increasing value, determining an updated driving range. As an example, the updated driving range=the currently displayed driving range+the driving-range increasing value.

S503: displaying the updated driving range, to replace the previously displayed driving range.

According to the above technical solution, while the electric vehicle is in the charging state, filtering calculation is performed to the driving range, if the third filtering condition is satisfied, real-time updating is performed, according to the product between the target proportion and the SOC variation value within the second preset duration of the power battery, the driving-range increasing value is determined, and the updated driving range is accordingly determined. Accordingly, during the charging, the updated driving range can be acquired in real time, which improves the usage experience of the electric vehicle by the user.

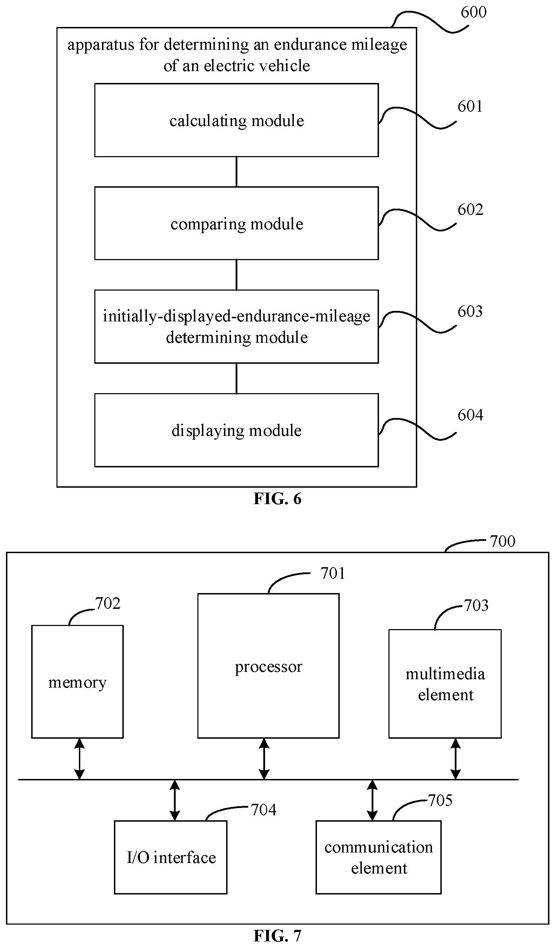

On the basis of the same inventive concept, the present disclosure further provides an apparatus for determining a driving range of an electric vehicle. FIG. 6 is a structural block diagram of an apparatus for determining a driving range of an electric vehicle according to an illustrative embodiment of the present disclosure. Referring to FIG. 6, the apparatus for determining a driving range of an electric vehicle 600 may include:

a calculating module 601 configured for, when the electric vehicle is powered on, calculating a current SOE value of the electric vehicle;
a comparing module 602 configured for comparing the current SOE value and a stored SOE value, wherein the stored SOE value refers to a SOE value that is stored before powering-off of last time of the electric vehicle;
an initially-displayed-driving-range determining module 603 configured for, if a difference between the current SOE value and the stored SOE value exceeds a preset difference range, determining an initial display driving range according to the current SOE value; and if the difference between the current SOE value and the stored SOE value is within the difference range, determining an actual remaining driving range stored before the powering-off of last time of the electric vehicle to be the initial display driving range; and
a displaying module 604 configured for displaying the initial display driving range.

By using the above technical solutions, in the process of determining the driving range of the electric vehicle, after the electric vehicle is powered on, the initial display driving range is corrected. Particularly, if the difference between the current SOE value calculated at the powering-on of this time and the SOE value stored before the powering-off of last time exceeds the preset difference range, the initial display driving range is determined according to the current SOE value, or else the actual remaining driving range stored before the powering-off of last time of the electric vehicle is determined to be the initial display driving range. Accordingly, the preset difference range is introduced into the process of determining the initial display driving range, and the accurate value is given according to the state of the electric vehicle, to positively combine the historical record and the real-time calculation result, which can increase the accuracy of the initial display driving range, and improve the usage experience of the electric vehicle by the user.

In an alternative embodiment, the apparatus for determining a driving range of an electric vehicle 600 may further include:

an initially-displayed-energy-consumption determining module configured for, if the difference between the current SOE value and the stored SOE value exceeds the preset difference range, determining a target energy consumption of the electric vehicle to be an initial display energy consumption; and if the difference between the current SOE value and the stored SOE value is within the difference range, determining an average energy consumption stored before the powering-off of last time of the electric vehicle to be the initial display energy consumption; and

the displaying module 604 may be further configured for displaying the initial display energy consumption.

In an alternative embodiment, the initially-displayed-driving-range determining module 603 is configured for, in the following manner, determining the initial display driving range according to the current SOE value: according to the ratio of the current SOE value to the target energy consumption of the electric vehicle, determining the initial display driving range.

In an alternative embodiment, the apparatus for determining a driving range of an electric vehicle 600 may further include:

a first driving-range-decreasing-value determining module configured for, after the electric vehicle is powered on, while the electric vehicle is in a stationary state, every time an SOC value of a power battery of the electric vehicle decreases to satisfy a first driving-range-calculation condition, according to a currently displayed driving range and a current SOC value of the power battery, determining an driving-range-decreasing coefficient, and according to an SOC decreasing value of the power battery and the driving-range-decreasing coefficient, determining an driving-range decreasing value, wherein the SOC decreasing value refers to a decreasing value, as compared with the SOC value when the power battery satisfies the first driving-range-calculation condition last time, of the SOC value when the power battery satisfies the first driving-range-calculation condition this time; and

a driving-range updating module configured for, according to a difference between the currently displayed driving range and the driving-range decreasing value, determining an updated driving range; and

the displaying module 604 is further configured for displaying the updated driving range.

In an alternative embodiment, the first driving-range-decreasing-value determining module is configured for, in the following manner, determining the driving-range-decreasing coefficient and the driving-range decreasing value: according to the ratio of the currently displayed driving range to the current SOC value of the power battery, determining the driving-range-decreasing coefficient; and

according to the product between the SOC decreasing value of the power battery and the driving-range-decreasing coefficient, determining the driving-range decreasing value.

In an alternative embodiment, the apparatus for determining a driving range of an electric vehicle 600 may further include:

a second driving-range-decreasing-value determining module configured for, after the electric vehicle is powered on, while the electric vehicle is travelling, if a first driving-range filtering condition is satisfied, every time a driving range of the electric vehicle changes to satisfy a second driving-range-calculation condition, according to a difference between a currently displayed driving range and a current actual remaining driving range and a current SOC value of a power battery of the electric vehicle, determining, by looking-up a table , an driving-range-decreasing coefficient corresponding to the current SOC value and the difference; and according to a driving range variation value of the electric vehicle and the driving-range-decreasing coefficient, determining an driving-range decreasing value, wherein the driving range variation value refers to a variation value, as compared with the driving range when the electric vehicle satisfies the second driving-range-calculation condition last time, of the driving range when the electric vehicle satisfies the second driving-range-calculation condition this time; and

a driving-range updating module configured for, according to a difference between the currently displayed driving range and the driving-range decreasing value, determining an updated driving range; and

the displaying module 604 is further configured for displaying the updated driving range.

In an alternative embodiment, the second driving-range-decreasing-value determining module is configured for, in the following manner, determining the driving-range decreasing value: according to the ratio of the driving range variation value of the electric vehicle to the driving-range-decreasing coefficient, determining the driving-range decreasing value.

In an alternative embodiment, the driving-range updating module may be further configured for, while the electric vehicle is travelling, if a second driving-range filtering condition is satisfied, every first preset duration, determining the current actual remaining driving range to be the updated driving range, and subsequently triggering the displaying module 604 to display the updated driving range.

In an alternative embodiment, the apparatus for determining a driving range of an electric vehicle 600 may further include:

an driving-range-increasing-value determining module configured for, after the electric vehicle is powered on, while the electric vehicle is charged, if a third driving-range filtering condition is satisfied, every second preset duration, according to a target proportion and an SOC variation value within the second preset duration of the power battery, determining an driving-range increasing value, wherein the target proportion refers to a ratio of a difference between a maximum driving range of the electric vehicle and the currently displayed driving range to a difference between the SOC value of the power battery when the power battery has a full electric quantity and the current SOC value of the power battery; and

a driving-range updating module configured for, according to a sum of the currently displayed driving range and the driving-range increasing value, determining an updated driving range; and

the displaying module 604 is further configured for displaying the updated driving range.

In an alternative embodiment, the driving-range-increasing-value determining module is configured for, in the following manner, determining the driving-range increasing value: according to the product between the target proportion and the SOC variation value, determining the driving-range increasing value.

The particular modes of the operations performed by the modules of the apparatus according to the above embodiments have already been described in detail in the embodiments of the method, and will not be explained and described in detail herein.

FIG. 7 is a block diagram of a controller 700 according to an illustrative embodiment. As shown in FIG. 7, the controller 700 may include a processor 701 and a memory 702. The controller 700 may further include one or more of a multimedia element 703, an input/output (I/O) interface 704 and a communication element 705.

The processor 701 is configured for controlling the overall operations of the controller 700, to complete all or part of the steps of the method for determining a driving range of an electric vehicle stated above. The memory 702 is configured for storing various types of data to support the operations in the controller 700. Those data may, for example, include instructions of any application programs or methods operating in the controller 700, and the data relevant to the application programs, for example, contact-person data, transmitted and received messages, pictures, audios and videos. The memory 702 may be embodied by using any type of volatile or non-volatile storage devices or combinations thereof, for example, a Static Random Access Memory (referred to for short as SRAM), an Electrically Erasable Programmable Read-Only Memory (referred to for short as EEPROM), an Erasable Programmable Read-Only Memory (referred to for short as EPROM), a Programmable Read-Only Memory (referred to for short as PROM), a Read-Only Memory (referred to for short as ROM), a magnetic memory, a flash memory, a magnetic disk or an optical disk. The multimedia element 703 may include a screen and an audio element. The screen may, for example, be a touch screen. The audio element is configured for outputting and/or inputting an audio signal. For example, the audio element may include a microphone, and the microphone is configured for receiving an external audio signal. The received audio signal may be further stored in the memory 702 or be sent by the communication element 705. The audio element further includes at least one loudspeaker configured for outputting the audio signal. The I/O interface 704 provides an interface between the processor 701 and other interface modules, wherein the other interface modules may be a keyboard, a mouse, a key and so on. Those keys may be keys or tangible keys. The communication element 705 is configured for wired or wireless communication between the controller 700 and other devices. The wireless communication includes, for example, Wi-Fi, Bluetooth, Near-Field Communication (referred to for short as NFC), 2G, 3G, 4G, NB-IOT, eMTC or other 5G, or a combination of one or more of them, which is not limited herein. Therefore, the corresponding communication element 705 may include a Wi-Fi module, a Bluetooth module, an NFC module and so on.

In an illustrative embodiment, the controller 700 may be embodied by one or more Application Specific Integrated Circuits (referred to for short as ASIC), Digital Signal Processors (referred to for short as DSP), Digital Signal Processing Devices (referred to for short as DSPD), Programmable Logic Devices (referred to for short as PLD), Field Programmable Gate Arrays (referred to for short as FPGA), controllers, microcontrollers, microprocessors or other electronic devices, to execute the method for determining a driving range of an electric vehicle stated above.

Another illustrative embodiment further provides a non-transient computer-readable storage medium including a program instruction, wherein the program instruction, when executed by a processor, implements the steps of the method for determining a driving range of an electric vehicle stated above. For example, the computer-readable storage medium may be the memory 702 stated above including a program instruction, and the program instruction may be executed by the processor 701 of the controller 700 to implement the method for determining a driving range of an electric vehicle stated above.

Another illustrative embodiment further provides a computer program product, wherein the computer program product includes a computer program executable by a programmable device, and the computer program has a code part that is, when executed by the programmable device, configured for executing the method for determining a driving range of an electric vehicle stated above.

The present disclosure further provides a vehicle, wherein the vehicle includes the apparatus for determining a driving range of an electric vehicle 600 according to the present disclosure, or the controller 700 according to the present disclosure.

In order to implement the above embodiments, the present disclosure further provides a computing and processing device, wherein the computing and processing device includes:

a memory storing a computer-readable code therein; and
one or more processors, wherein when the computer-readable code is executed by the one or more processors, the computing and processing device implements the method for determining a driving range of an electric vehicle stated above.

In order to implement the above embodiments, the present disclosure further provides a computer program, wherein the computer program includes a computer-readable code, and when the computer-readable code is executed in a computing and processing device, the computer-readable code causes the computing and processing device to implement the method for determining a driving range of an electric vehicle stated above.

In order to implement the above embodiments, the present disclosure further provides a computer-readable storage medium, wherein the computer-readable storage medium stores the computer program stated above.

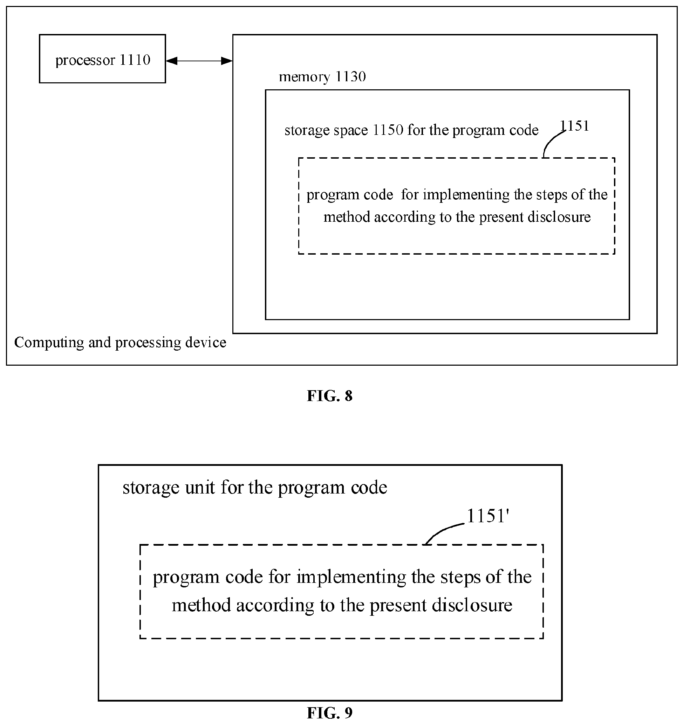

FIG. 8 is a schematic structural diagram of a computing and processing device according to an embodiment of the present disclosure. The computing and processing device generally includes a processor 1110 and a computer program product or computer-readable medium in the form of a memory 1130. The memory 1130 may be electronic memories such as flash memory, EEPROM (Electrically Erasable Programmable Read Only Memory), EPROM, hard disk or ROM. The memory 1130 has the storage space 1150 of the program code 1151 for implementing any steps of the above method. For example, the storage space 1150 for program code may contain program codes 1151 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 9. The storage unit may have storage segments or storage spaces with similar arrangement to the memory 1130 of the server in FIG. 8. The program codes may, for example, be compressed in a suitable form. Generally, the storage unit contains a computer-readable code 1151', which can be read by a processor like 1110. When those codes are executed by the server, the codes cause the server to implement each of the steps of the method described above.

In the description of the present disclosure, the description referring to the terms "an embodiment", "some embodiments", "example", "particular example" or "some examples" and so on means that particular features, structures, materials or characteristics described with reference to the embodiment or example are included in at least one of the embodiments or examples of the present disclosure. In the description, the illustrative expressions of the above terms do not necessarily relate to the same embodiment or example. Furthermore, the described particular features, structures, materials or characteristics may be combined in one or more embodiments or examples in a suitable form. Moreover, subject to avoiding contradiction, a person skilled in the art may combine different embodiments or examples described in the description and the features of the different embodiments or examples.

Moreover, the terms "first" and "second" are merely for the purpose of describing, and should not be construed as indicating or implying the degrees of importance or implicitly indicating the quantity of the specified technical features. Accordingly, the features defined by "first" and "second" may explicitly or implicitly include at least one of the features. In the description of the present disclosure, the meaning of "plurality of" is "at least two", for example, two, three and so on, unless explicitly and particularly defined otherwise.

The logics and/or steps described in the flow chart or in another manner herein, for example, may be deemed as a fixed-sequence list of executable instructions for implementing the logical functions, and may particularly be implemented in any computer-readable mediums, to be used by an instruction executing system, apparatus or device (for example, a computer-based system, a system including a processor, or another system that can read an instruction from an instruction executing system, apparatus or device and execute the instruction), or be used in combination with an instruction executing system, apparatus or device. In the description, the "computer-readable medium" may refer to any device that can contain, store, communicate, send or transmit a program to be used by an instruction executing system, apparatus or device or be used in combination with an instruction executing system, apparatus or device. More particular examples of the computer-readable medium (non-exhaustive list) include: an electric connector (electronic device) having one or more wires, a portable computer disk cartridge (magnetic device), a Random Access Memory (RAM), a read-only memory (ROM), an erasable programmable read-only memory (EPROM or flash memory), an optical fiber device, and a portable compact-disk read-only memory (CDROM). In addition, the computer-readable medium may even be paper or another suitable medium on which the program can be printed, because the program may be obtained in an electronic mode by, for example, optically scanning the paper or another medium and then editing or interpreting or, if necessary, processing in another suitable manner, and then stored into a computer memory.

It should be understood that the parts of the present disclosure may be implemented by hardware, software, firmware or a combination thereof. In the above embodiments, multiple steps or methods may be stored in a memory and implemented by suitable instructions executing a software or firmware executed by the system. For example, if they are implemented by hardware, as in another embodiment, they may be implemented by using any one or combination of the following techniques well known in the art: a discrete logic circuit having a logic gate circuit configured for implementing a logic function to data signals, a specific integrated circuit having a suitable combinational logic gate circuit, a programmable gate array (PGA), a field-programmable gate array (FPGA) and so on.

A person skilled in the art can understand that all or some of the steps for implementing the method according to the above embodiments may be completed by a program instructing a relative hardware, the program may be stored in a computer-readable storage medium, and, when the program is executed, it includes one of the steps of the process embodiments or a combination thereof.

Moreover, the function units according to the embodiments of the present disclosure may be integrated in one processing module, the units may also physically exist separately, and two or more units may also be integrated in one module. The above-described integrated module may be implemented in the form of hardware, and may also be implemented in the form of a software function module. The integrated module, if implemented in the form of a software function module and sold or used as an independent product, may be stored in a computer-readable storage medium.

The above-mentioned storage medium may be a read-only memory, a magnetic disk, an optical disk and so on.

## Claims

1. A method for determining a driving range of an electric vehicle, the method comprising:

    (S101; S201) when the electric vehicle is powered on, calculating a current state of energy, SOE, value of a battery of the electric vehicle, wherein the SOE value is obtained by calculation according to a remaining-battery-electric-quantity percentage, a battery health degree, a battery-electric-quantity theoretical value and a cell temperature coefficient of the battery of the electric vehicle;
    (S102; S202) comparing the current SOE value and a stored SOE value, wherein the stored SOE value refers to a SOE value stored before powering-off of last time of the electric vehicle;
    (S103) if a SOE difference between the current SOE value and the stored SOE value exceeds a preset difference range,

        - (S203) determining a target energy consumption of the electric vehicle to be an initial display energy consumption, wherein the target energy consumption is the ratio of the theoretical value of the electric quantity of the battery of the electric vehicle to the maximum driving range of the electric vehicle,
        - determining an initial display driving range according to the ratio of the current SOE value to the target energy consumption of the electric vehicle;

    (S104) if the SOE difference between the current SOE value and the stored SOE value is within the preset difference range,

        - determining an actual remaining driving range stored before the powering-off of last time of the electric vehicle to be the initial display driving range,
        - (S206) determining an average energy consumption stored before the powering-off of last time of the electric vehicle to be the initial display energy consumption; and

    (S105) displaying the initial display driving range, and
    (S207) displaying the initial display energy consumption.

2. The method according to claim 1, wherein after the electric vehicle is powered on, the method further comprises:

(S301) when the electric vehicle is in a stationary state, and every time an state of charge, SOC, value of a power battery of the electric vehicle decreases to satisfy a first driving-range-calculation condition, wherein the SOC refers to the remaining-battery-electric-quantity percentage,
determining an driving-range-decreasing coefficient according to a currently displayed driving range and a current SOC value of the power battery, and
determining an driving-range decreasing value according to an SOC decreasing value of the power battery and the driving-range-decreasing coefficient,
wherein the SOC decreasing value refers to a decreasing value, as compared with the SOC value when the power battery satisfies the first driving-range-calculation condition last time, of the SOC value when the power battery satisfies the first driving-range-calculation condition this time;
(S302) determining an updated driving range according to the difference between the currently displayed driving range and the driving-range decreasing value; and
(S303) displaying the updated driving range.

3. The method according to claim 2, wherein the first driving-range-calculation condition is that the SOC value of the power battery decreases by a first preset proportion.

4. The method according to any one of claims 1-3, wherein after the electric vehicle is powered on, the method further comprises:

(S401) when the electric vehicle is travelling, and if a first driving-range filtering condition is satisfied, every time the driving range of the electric vehicle changes to satisfy a second driving-range-calculation condition, according to a driving-range difference between a currently displayed driving range and a current actual remaining driving range and a current SOC value of a power battery of the electric vehicle, determining an driving-range-decreasing coefficient corresponding to the current SOC value and the driving-range difference by looking up a table, wherein the current actual remaining driving range is determined in real time based on the current SOE value and a current average energy consumption; and determining an driving-range decreasing value according to a driving range variation value of the electric vehicle and the driving-range-decreasing coefficient, wherein the driving range variation value refers to a variation value, as compared with the driving range when the electric vehicle satisfies the second driving-range-calculation condition last time, of the driving range when the electric vehicle satisfies the second driving-range-calculation condition this time;
(S402) determining an updated driving range according to the difference between the currently displayed driving range and the driving-range decreasing value; and
(S403) displaying the updated driving range;
wherein the first driving-range filtering condition includes:

that the current SOC value of the power battery is less than a preset SOC threshold; or
that the current SOC value of the power battery is greater than or equal to the SOC threshold, and the currently displayed driving range is greater than the current actual remaining driving range; or
that the current SOC value of the power battery is greater than or equal to the SOC threshold, and the SOC value of the power battery is decreasing.

5. The method according to claim 4, wherein the second driving-range-calculation condition is that the driving range increases by a preset distance.

6. The method according to claim 4, wherein after the electric vehicle is powered on, the method further comprises:

(S404) when the electric vehicle is travelling, and if a second driving-range filtering condition is satisfied, determining the current actual remaining driving range to be the updated driving range every first preset duration, and subsequently executing the step of displaying the updated driving range;
wherein the second driving-range filtering condition includes that the current SOC value of the power battery is greater than or equal to the SOC threshold, the SOC value of the power battery is increasing, and the currently displayed driving range is less than the current actual remaining driving range.

7. The method according to any one of claims 1-6, wherein after the electric vehicle is powered on, the method further comprises:

(S501) when the electric vehicle is charged, if a third driving-range filtering condition is satisfied, every second preset duration, determining an driving-range increasing value according to a target proportion and an SOC variation value within the second preset duration of the power battery, wherein the target proportion refers to a ratio of the difference between a maximum driving range of the electric vehicle and the currently displayed driving range to the difference between the SOC value of the power battery when the power battery has a full electric quantity and the current SOC value of the power battery;

(S502) determining an updated driving range according to a sum of the currently displayed driving range and the driving-range increasing value; and

(S503) displaying the updated driving range;

wherein the third driving-range filtering condition includes that the current SOC value of the power battery does not reach the SOC value of the power battery when the power battery has a full electric quantity, or that the currently displayed driving range does not reach the maximum driving range of the electric vehicle.

8.  An apparatus for determining a driving range of an electric vehicle (600), wherein the apparatus comprises:

a calculating module (601) configured for, when the electric vehicle is powered on, calculating a current SOE value of a battery of the electric vehicle, wherein the SOE value is obtained by calculation according to a remaining-battery-electric-quantity percentage, a battery health degree, a battery-electric-quantity theoretical value and a cell temperature coefficient of the battery of the electric vehicle;

an initially-displayed-energy-consumption determining module configured for,

- if a SOE difference between the current SOE value and the stored SOE value exceeds the preset difference range, determining a target energy consumption of the electric vehicle to be an initial display energy consumption, wherein the target energy consumption is the ratio of the theoretical value of the electric quantity of the battery of the electric vehicle to the maximum driving range of the electric vehicle; and
- if the SOE difference between the current SOE value and the stored SOE value is within the difference range, determining an average energy consumption stored before the powering-off of last time of the electric vehicle to be the initial display energy consumption;

a comparing module (602) configured for comparing the current SOE value and a stored SOE value, wherein the stored SOE value refers to a SOE value that is stored before powering-off of last time of the electric vehicle;

an initially-displayed-driving-range determining module (603) configured for,

- if the first difference between the current SOE value and the stored SOE value exceeds a preset difference range, determining an initial display driving range according to the ratio of the current SOE value to the target energy consumption of the electric vehicle; and
- if the first difference between the current SOE value and the stored SOE value is within the difference range, determining an actual remaining driving range stored before the powering-off of last time of the electric vehicle to be the initial display driving range;

a displaying module (604) configured for displaying the initial display driving range and for displaying the initial display energy consumption.

9.  The apparatus according to claim 8, wherein the apparatus further comprises:

a first driving-range-decreasing-value determining module configured for, after the electric vehicle is powered on, when the electric vehicle is in a stationary state, and every time an SOC value of a power battery of the electric vehicle decreases to satisfy a first driving-range-calculation condition, determining an driving-range-decreasing coefficient according to a currently displayed driving range and a current SOC value of the power battery, and determining an driving-range decreasing value according to an SOC decreasing value of the power battery and the driving-range-decreasing coefficient, wherein the SOC decreasing value refers to a decreasing value, as compared with the SOC value when the power battery satisfies the first driving-range-calculation condition last time, of the SOC value of the power battery when the power battery satisfies the first driving-range-calculation condition this time; and

an driving-range updating module configured for determining an updated driving range according to the difference between the currently displayed driving range and the driving-range decreasing value; and

the displaying module is further configured for displaying the updated driving range.

10. An electric vehicle (600), wherein the electric vehicle comprises the apparatus for determining a driving range of an electric vehicle according to claim 8 or 9.

11. A computer program, wherein the computer program comprises a computer-readable code, and when the computer-readable code is executed in a computing and processing device, the computer-readable code causes the computing and processing device to implement the method for determining a driving range of an electric vehicle according to any one of claims 1-7.

12. A computer-readable storage medium, wherein the computer-readable storage medium stores the computer program according to claim 11.

**Patentansprüche**

1. Verfahren zum Bestimmen einer Reichweite eines Elektrofahrzeugs, wobei das Verfahren aufweist:

(S101; S201) wenn das Elektrofahrzeug eingeschaltet wird, Berechnen eines aktuellen Energiezustand-, SOE-, Werts einer Batterie des Elektrofahrzeugs, wobei der SOE-Wert durch Berechnung gemäß einem Restbatteriestrommenge-Prozentsatz, einem Batteriezustandsgrad, einem theoretischen Batteriestrommengenwert und einem Zelltemperaturkoeffizienten der Batterie des Elektrofahrzeugs erhalten wird;
(S102; S202) Vergleichen des aktuellen SOE-Werts und eines gespeicherten SOE-Werts, wobei sich der gespeicherte SOE-Wert auf einen SOE-Wert bezieht, der vor dem letzten Ausschalten des Elektrofahrzeugs gespeichert wurde;
(S103) wenn eine SOE-Differenz zwischen dem aktuellen SOE-Wert und dem gespeicherten SOE-Wert einen voreingestellten Differenzbereich überschreitet,

- (S203) Bestimmen eines Soll-Energieverbrauchs des Elektrofahrzeugs, der ein anfänglicher Anzeige-Energieverbrauch ist, wobei der Soll-Energieverbrauch das Verhältnis des theoretischen Batteriestrommengenwerts der Batterie des Elektrofahrzeugs zur maximalen Reichweite des Elektrofahrzeugs ist,
- Bestimmen einer anfänglichen Anzeige-Reichweite entsprechend dem Verhältnis des aktuellen SOE-Werts zu dem Ziel-Energieverbrauch des Elektrofahrzeugs;

(S104) wenn sich die SOE-Differenz zwischen dem aktuellen SOE-Wert und dem gespeicherten SOE-Wert innerhalb des voreingestellten Differenzbereichs befindet,

- Bestimmen einer tatsächlichen Restreichweite, die vor dem letzten Ausschalten des Elektrofahrzeugs gespeichert wurde, als anfängliche Anzeige-Reichweite,
- (S206) Bestimmen eines Durchschnittsenergieverbrauchs, der vor dem letzten Ausschalten des Elektrofahrzeugs gespeichert wurde, als den anfänglichen Anzeige-Energieverbrauch; und

(S105) Anzeigen der anfänglichen Anzeige-Reichweite, und
(S207) Anzeigen des anfänglichen Anzeige-Energieverbrauchs.

2. Verfahren nach Anspruch 1, wobei das Verfahren nach dem Einschalten des Elektrofahrzeugs ferner aufweist:

(S301) wenn sich das Elektrofahrzeug in einem stationären Zustand befindet, und jedes Mal, wenn ein Ladezustand-, SOC-, Wert einer Leistungsbatterie des Elektrofahrzeugs abnimmt, um eine erste Reichweitenberechnungsbedingung zu erfüllen, wobei sich der SOC auf den Restbatteriestrommengen-Prozentsatz bezieht, Bestimmen eines Reichweitenverringerungskoeffizienten entsprechend einer aktuell angezeigten Reichweite und eines aktuellen SOC-Werts der Leistungsbatterie, und
Bestimmen eines Reichweitenverringerungswerts entsprechend einem SOC-Verringerungswerts der Leistungsbatterie und des Reichweitenverringerungskoeffizienten,
wobei sich der SOC-Verringerungswert auf einen Verringerungswert des SOC-Werts bezieht, wenn die Leistungsbatterie die erste Reichweitenberechnungsbedingung diesmal erfüllt, verglichen mit dem SOC-Wert, wenn die Leistungsbatterie die erste Reichweitenberechnungsbedingung das letzte Mal erfüllt hat;
(S302) Bestimmen einer aktualisierten Reichweite entsprechend der Differenz zwischen der aktuell angezeigten Reichweite und dem Reichweitenverringerungswert; und
(S303) Anzeigen der aktualisierten Reichweite.

3. Verfahren nach Anspruch 2, wobei die erste Reichweitenberechnungsbedingung darin besteht, dass der SOC-Wert der Leistungsbatterie um einen ersten voreingestellten Anteil abnimmt.

4. Verfahren nach einem der Ansprüche 1 bis 3, wobei das Verfahren nach dem Einschalten des Elektrofahrzeugs ferner aufweist:

(S401) wenn das Elektrofahrzeug fährt, und wenn eine erste Reichweitenfilterbedingung erfüllt ist, jedes Mal, wenn sich die Reichweite des Elektrofahrzeugs ändert, um eine zweite Reichweitenberechnungsbedingung zu erfüllen, entsprechend einer Reichweitendifferenz zwischen einer aktuell angezeigten Reichweite und einer aktuellen tatsächlichen Restreichweite sowie einem aktuellen SOC-Wert einer Leistungsbatterie des Elektrofahrzeugs, Bestimmen eines Reichweitenverringerungskoeffizienten entsprechend dem aktuellen SOC-Wert und der Reichweitendifferenz durch Nachschlagen in einer Tabelle, wobei die aktuelle tatsächliche Restreichweite in Echtzeit basierend auf dem aktuellen SOE-Wert und einem aktuellen Durchschnittsenergieverbrauch bestimmt wird; und Bestimmen eines Reichweitenverringerungswerts gemäß einem Reichweitenveränderungswert des Elektrofahrzeugs und dem Reichweitenverringerungskoeffizienten, wobei sich der Reichweitenveränderungswert auf einen Veränderungswert der Reichweite bezieht, wenn das Elektrofahrzeug die zweite Reichweitenberechnungsbedingung dieses Mal erfüllt, verglichen mit der Reichweite, wenn das Elektrofahrzeug die zweite Reichweitenberechnungsbedingung das letzte Mal erfüllt hat;
(S402) Bestimmen einer aktualisierten Reichweite entsprechend der Differenz zwischen der aktuell angezeigten Reichweite und dem Reichweitenverringerungswert; und
(S403) Anzeigen der aktualisierten Reichweite;
wobei die erste Reichweitenfilterbedingung aufweist:

dass der aktuelle SOC-Wert der Leistungsbatterie kleiner als ein voreingestellter SOC-Schwellenwert ist; oder
dass der aktuelle SOC-Wert der Leistungsbatterie größer oder gleich dem SOC-Schwellenwert ist und die aktuell angezeigte Reichweite größer ist als die aktuelle tatsächliche Restreichweite; oder
dass der aktuelle SOC-Wert der Energiebatterie größer oder gleich dem SOC-Schwellenwert ist und der SOC-Wert der Energiebatterie abnimmt.

5. Verfahren nach Anspruch 4, wobei die zweite Reichweitenberechnungsbedingung darin besteht, dass die Reichweite um eine voreingestellte Entfernung zunimmt.

6. Verfahren nach Anspruch 4, wobei das Verfahren nach dem Einschalten des Elektrofahrzeugs ferner aufweist:

(S404) beim Fahren des Elektrofahrzeugs und wenn eine zweite Reichweitenfilterbedingung erfüllt ist, Bestimmen der aktuellen tatsächlichen Restreichweite als die aktualisierte Reichweite jede erste voreingestellte Dauer und anschließend Ausführen des Schritts des Anzeigens der aktualisierten Reichweite;
wobei die zweite Reichweitenfilterbedingung aufweist, dass der aktuelle SOC-Wert der Leistungsbatterie größer oder gleich dem SOC-Schwellenwert ist, der SOC-Wert der Leistungsbatterie ansteigt und die aktuell angezeigte Reichweite kleiner als die aktuelle tatsächliche Restreichweite ist.

7. Verfahren nach einem der Ansprüche 1 bis 6, wobei das Verfahren nach dem Einschalten des Elektrofahrzeugs ferner aufweist:

(S501) beim Laden des Elektrofahrzeugs, wenn eine dritte Reichweitenfilterbedingung erfüllt ist, jede zweite voreingestellte Dauer, Bestimmen eines Reichweitenerhöhungswerts gemäß einem Zielanteil und einem SOC-Änderungswert innerhalb der zweiten voreingestellten Dauer der Leistungsbatterie, wobei sich der Zielanteil auf ein Verhältnis der Differenz zwischen einer maximalen Reichweite des Elektrofahrzeugs und der aktuell angezeigten Reichweite zu der Differenz zwischen dem SOC-Wert der Leistungsbatterie, wenn die Leistungsbatterie eine volle Strommenge hat, und dem aktuellen SOC-Wert der Leistungsbatterie bezieht;
(S502) Bestimmen einer aktualisierten Reichweite gemäß einer Summe aus der aktuell angezeigten Reichweite und dem Reichweitenerhöhungswert; und
(S503) Anzeigen der aktualisierten Reichweite;
wobei die dritte Reichweitenfilterbedingung aufweist, dass der aktuelle SOC-Wert der Leistungsbatterie nicht den SOC-Wert der Leistungsbatterie erreicht, wenn die Leistungsbatterie eine volle Strommenge hat, oder dass die aktuell angezeigte Reichweite nicht die maximale Reichweite des Elektrofahrzeugs erreicht.

8. Vorrichtung zum Bestimmen einer Reichweite eines Elektrofahrzeugs (600), wobei die Vorrichtung aufweist:

ein Berechnungsmodul (601), das konfiguriert ist, wenn das Elektrofahrzeug eingeschaltet wird, einen aktuellen SOE-Wert einer Batterie des Elektrofahrzeugs zu berechnen, wobei der SOE-Wert durch Berechnung gemäß einem Restbatteriestrommengen-Prozentsatz, einem Batteriezustandsgrad, einem theoretischen Batteriestrommengenwert und einem Zelltemperaturkoeffizienten der Batterie des Elektrofahrzeugs erhalten wird;
ein Bestimmungsmodul für den anfänglich angezeigten Energieverbrauch, das konfiguriert ist zum,

- wenn eine SOE-Differenz zwischen dem aktuellen SOE-Wert und dem gespeicherten SOE-Wert den voreingestellten Differenzbereich überschreitet, Bestimmen eines Ziel-Energieverbrauchs des Elektrofahrzeugs, der ein anfänglicher Anzeige-Energieverbrauch ist, wobei der Ziel-Energieverbrauch das Verhältnis des theoretischen Batteriestrommengenwerts der Batterie des Elektrofahrzeugs zu der maximalen Reichweite des Elektrofahrzeugs ist; und
- wenn sich die SOE-Differenz zwischen dem aktuellen SOE-Wert und dem gespeicherten SOE-Wert innerhalb des Differenzbereichs befindet, Bestimmen eines Durchschnittsenergieverbrauchs, der vor dem letzten Ausschalten des Elektrofahrzeugs gespeichert wurde, als den anfänglichen Anzeige-Energieverbrauch;

ein Vergleichsmodul (602), das konfiguriert ist zum Vergleichen des aktuellen SOE-Werts und eines gespeicherten SOE-Werts, wobei sich der gespeicherte SOE-Wert auf einen SOE-Wert bezieht, der vor dem letzten Ausschalten des Elektrofahrzeugs gespeichert wurde;
ein Bestimmungsmodul (603) für die anfänglich angezeigte Reichweite, das konfiguriert ist zum,

- wenn die erste Differenz zwischen dem aktuellen SOE-Wert und dem gespeicherten SOE-Wert einen voreingestellten Differenzbereich überschreitet, Bestimmen einer anfänglichen Anzeige-Reichweite gemäß dem Verhältnis des aktuellen SOE-Werts zu dem Soll-Energieverbrauch des Elektrofahrzeugs; und
- wenn die erste Differenz zwischen dem aktuellen SOE-Wert und dem gespeicherten SOE-Wert innerhalb des Differenzbereichs liegt, Bestimmen einer tatsächlichen Restreichweite, die vor dem letzten Ausschalten des Elektrofahrzeugs gespeichert wurde, als anfängliche Anzeige-Reichweite;

ein Anzeigemodul (604), das konfiguriert ist zum Anzeigen der anfänglichen Anzeige der Reichweite und zum Anzeigen des anfänglichen Anzeige-Energieverbrauchs.

9. Vorrichtung nach Anspruch 8, wobei die Vorrichtung ferner aufweist:

ein erstes Bestimmungsmodul für einen Reichweitenverringerungswert, das konfiguriert ist, nach dem Einschalten des Elektrofahrzeugs, wenn sich das Elektrofahrzeug in einem stationären Zustand befindet, und jedes Mal, wenn ein SOC-Wert einer Leistungsbatterie des Elektrofahrzeugs abnimmt, um eine erste Reichweitenberechnungsbedingung zu erfüllen, zum Bestimmen eines Reichweitenverringerungskoeffizienten gemäß einer aktuellen angezeigten Reichweite und einem aktuellen SOC-Wert der Leistungsbatterie, und Bestimmen eines Reichweitenverringerungswerts gemäß einem SOC-Verringerungswert der Leistungsbatterie und dem Reichweiten-Verringerungskoeffizienten, wobei sich der SOC-Verringerungswert auf einen Verringerungswert des SOC-Werts der Leistungsbatterie bezieht, wenn die Leistungsbatterie die erste Reichweitenberechnungsbedingung dieses Mal erfüllt, verglichen mit dem SOC-Wert, wenn die Leistungsbatterie die erste Reichweitenberechnungsbedingung das letzte Mal erfüllt hat; und
ein Aktualisierungsmodul für die Reichweite, das konfiguriert zum Bestimmen einer aktualisierten Reichweite entsprechend der Differenz zwischen der aktuellen angezeigten Reichweite und dem Reichweitenverringerungswert; und
das Anzeigemodul ferner zum Anzeigen der aktualisierten Reichweite konfiguriert ist.

10. Elektrofahrzeug (600), wobei das Elektrofahrzeug die Vorrichtung zum Bestimmen einer Reichweite eines Elektrofahrzeugs gemäß Anspruch 8 oder 9 aufweist.

11. Computerprogramm, wobei das Computerprogramm einen computer-lesbaren Code aufweist, und wenn der computer-lesbare Code in einer Rechen- und Verarbeitungsvorrichtung ausgeführt wird, bewirkt der computer-lesbare Code, dass die Rechen- und Verarbeitungsvorrichtung das Verfahren zum Bestimmen einer Reichweite eines Elektrofahrzeugs nach einem der Ansprüche 1-7 implementiert.

**12.** Computerlesbares Speichermedium, wobei das computerlesbare Speichermedium das Computerprogramm nach Anspruch 11 speichert.

**Revendications**

**1.** Procédé pour déterminer une autonomie de conduite d'un véhicule électrique, le procédé comprenant :

(S101 ; S201) lorsque le véhicule électrique a été mis en fonctionnement sous alimentation électrique, le calcul d'une valeur d'état d'énergie, SOE, courante d'une batterie du véhicule électrique, dans lequel la valeur de SOE est obtenue par calcul en fonction d'un pourcentage de quantité d'électricité de batterie restante, d'un degré d'état de santé de batterie, d'une valeur théorique de quantité d'électricité de batterie et d'un coefficient de température d'élément(s) de la batterie du véhicule électrique ;
(S102 ; S202) la comparaison de la valeur de SOE courante et d'une valeur de SOE stockée, dans lequel la valeur de SOE stockée se réfère à une valeur de SOE qui a été stockée avant l'arrêt du fonctionnement sous alimentation électrique de dernière fois du véhicule électrique ;
(S103) si une différence de SOE entre la valeur de SOE courante et la valeur de SOE stockée excède une plage de différence prédéfinie,

- (S203) la détermination d'une consommation d'énergie cible du véhicule électrique comme étant une consommation d'énergie d'affichage initial, dans lequel la consommation d'énergie cible est le rapport de la valeur théorique de la quantité d'électricité de la batterie du véhicule électrique sur l'autonomie de conduite maximum du véhicule électrique ; et
- la détermination d'une autonomie de conduite d'affichage initial en fonction du rapport de la valeur de SOE courante sur la consommation d'énergie cible du véhicule électrique ;

(S104) si la différence de SOE entre la valeur de SOE courante et la valeur de SOE stockée est à l'intérieur de la plage de différence prédéfinie,

- la détermination d'une autonomie de conduite restante réelle qui a été stockée avant l'arrêt du fonctionnement sous alimentation électrique de dernière fois du véhicule électrique comme étant l'autonomie de conduite d'affichage initial ; et
- (S206) la détermination d'une consommation d'énergie moyenne qui a été stockée avant l'arrêt du fonctionnement sous alimentation électrique de dernière fois du véhicule électrique comme étant la consommation d'énergie d'affichage initial ; et

(S105) l'affichage de l'autonomie de conduite d'affichage initial ; et
(S207) l'affichage de la consommation d'énergie d'affichage initial.

**2.** Procédé selon la revendication 1, dans lequel, après que le véhicule électrique a été mis en fonctionnement sous alimentation électrique, le procédé comprend en outre :

(S301) lorsque le véhicule électrique est dans un état stationnaire, et chaque fois qu'une valeur d'état de charge, SOC, d'une batterie d'alimentation électrique du véhicule électrique diminue afin de satisfaire une première condition de calcul d'autonomie de conduite, dans lequel le SOC se réfère au pourcentage de quantité d'électricité de batterie restante,
la détermination d'un coefficient de diminution d'autonomie de conduite en fonction d'une autonomie de conduite affichée présentement et d'une valeur de SOC courante de la batterie d'alimentation électrique ; et
la détermination d'une valeur de diminution d'autonomie de conduite en fonction d'une valeur de diminution de SOC de la batterie d'alimentation électrique et du coefficient de diminution d'autonomie de conduite ;
dans lequel la valeur de diminution de SOC se réfère à une valeur de diminution, par comparaison avec la valeur de SOC lorsque la batterie d'alimentation électrique a satisfait la première condition de calcul d'autonomie de conduite la dernière fois, de la valeur de SOC lorsque la batterie d'alimentation électrique satisfait la première condition de calcul d'autonomie de conduite cette fois ;
(S302) la détermination d'une autonomie de conduite mise à jour en fonction de la différence entre l'autonomie de conduite affichée présentement et la valeur de diminution d'autonomie de conduite ; et
(S303) l'affichage de l'autonomie de conduite mise à jour.

**3.** Procédé selon la revendication 2, dans lequel la première condition de calcul d'autonomie de conduite consiste en ce que la valeur de SOC de la batterie d'alimentation électrique diminue selon une première proportion prédéfinie.

**4.** Procédé selon l'une quelconque des revendications 1 à 3, dans lequel, après que le véhicule électrique a été mis en fonctionnement sous alimentation électrique, le procédé comprend en outre :

(S401) lorsque le véhicule électrique est en train de rouler, et si une première condition de filtrage d'autonomie de conduite est satisfaite, chaque fois que l'autonomie de conduite du véhicule électrique est modifiée afin de satisfaire une seconde condition de calcul d'autonomie de conduite, en fonction d'une différence d'autonomie de conduite entre une autonomie de conduite affichée présentement et une autonomie de conduite restante réelle courante et d'une valeur de SOC courante d'une batterie d'alimentation électrique du véhicule électrique, la détermination d'un coefficient de diminution d'autonomie de conduite qui correspond à la valeur de SOC courante et à la différence d'autonomie de conduite en consultant une table, dans lequel l'autonomie de conduite restante réelle courante est déterminée en temps réel sur la base de la valeur de SOE courante et d'une consommation d'énergie moyenne courante ; et la détermination d'une valeur de diminution d'autonomie de conduite en fonction d'une valeur de variation d'autonomie de conduite du véhicule électrique et du coefficient de diminution d'autonomie de conduite, dans lequel la valeur de variation d'autonomie de conduite se réfère à une valeur de variation, par comparaison avec l'autonomie de conduite lorsque le véhicule électrique a satisfait la seconde condition de calcul d'autonomie de conduite la dernière fois, de l'autonomie de conduite lorsque le véhicule électrique satisfait la seconde condition de calcul d'autonomie de conduite cette fois ;
(S402) la détermination d'une autonomie de conduite mise à jour en fonction de la différence entre l'autonomie de conduite affichée présentement et la valeur de diminution d'autonomie de conduite ; et
(S403) l'affichage de l'autonomie de conduite mise à jour ;
dans lequel la première condition de filtrage d'autonomie de conduite inclut :

le fait que la valeur de SOC courante de la batterie d'alimentation électrique est inférieure à un seuil de SOC prédéfini ; ou
le fait que la valeur de SOC courante de la batterie d'alimentation électrique est supérieure ou égale au seuil de SOC et le fait que l'autonomie de conduite affichée présentement est supérieure à l'autonomie de conduite restante réelle courante ; ou
le fait que la valeur de SOC courante de la batterie d'alimentation électrique est supérieure ou égale au seuil de SOC et le fait que la valeur de SOC de la batterie d'alimentation électrique est en train de diminuer.

**5.** Procédé selon la revendication 4, dans lequel la seconde condition de calcul d'autonomie de conduite consiste en ce que l'autonomie de conduite augmente selon une distance prédéfinie.

**6.** Procédé selon la revendication 4, dans lequel, après que le véhicule électrique a été mis en fonctionnement sous alimentation électrique, le procédé comprend en outre :

(S404) lorsque le véhicule électrique est en train de rouler, et si une deuxième condition de filtrage d'autonomie de conduite est satisfaite, la détermination de l'autonomie de conduite restante réelle courante comme étant l'autonomie de conduite mise à jour pour chaque première durée prédéfinie et subséquemment, l'exécution de l'étape d'affichage de l'autonomie de conduite mise à jour ;
dans lequel la deuxième condition de filtrage d'autonomie de conduite inclut le fait que la valeur de SOC courante de la batterie d'alimentation électrique est supérieure ou égale au seuil de SOC, le fait que la valeur de SOC de la batterie d'alimentation électrique est en train d'augmenter et le fait que l'autonomie de conduite affichée présentement est inférieure à l'autonomie de conduite restante réelle courante.

**7.** Procédé selon l'une quelconque des revendications 1 à 6, dans lequel, après que le véhicule électrique a été mis en fonctionnement sous alimentation électrique, le procédé comprend en outre :

(S501) lorsque le véhicule électrique est chargé, si une troisième condition de filtrage d'autonomie de conduite est satisfaite, pour chaque seconde durée prédéfinie, la détermination d'une valeur d'augmentation d'autonomie de conduite en fonction d'une proportion cible et d'une valeur de variation de SOC à l'intérieur de la seconde durée prédéfinie de la batterie d'alimentation électrique, dans lequel la proportion cible se réfère à un rapport de la différence entre une autonomie de conduite maximum du véhicule électrique et l'autonomie de conduite affichée présentement sur la différence entre la valeur de SOC de la batterie d'alimentation électrique lorsque la batterie d'alimentation électrique présente une quantité d'électricité complète et la valeur de SOC courante de la batterie d'alimentation électrique ;
(S502) la détermination d'une autonomie de conduite mise à jour en fonction d'une somme de l'autonomie de conduite affichée présentement et de la valeur d'augmentation d'autonomie de conduite ; et
(S503) l'affichage de l'autonomie de conduite mise à jour ;
dans lequel la troisième condition de filtrage d'autonomie de conduite inclut le fait que la valeur de SOC courante de la batterie d'alimentation électrique n'atteint pas la valeur de SOC de la batterie d'alimentation électrique lorsque la batterie d'alimentation électrique présente une quantité d'électricité complète, ou le fait que l'autonomie de conduite affichée présentement n'atteint pas l'autonomie de conduite maximum du véhicule électrique.

8. Appareil pour déterminer une autonomie de conduite d'un véhicule électrique (600), dans lequel l'appareil comprend :

un module de calcul (601) configuré pour, lorsque le véhicule électrique a été mis en fonctionnement sous alimentation électrique, calculer une valeur de SOE courante d'une batterie du véhicule électrique, dans lequel la valeur de SOE est obtenue par calcul en fonction d'un pourcentage de quantité d'électricité de batterie restante, d'un degré d'état de santé de batterie, d'une valeur théorique de quantité d'électricité de batterie et d'un coefficient de température d'élément(s) de la batterie du véhicule électrique ;
un module de détermination de consommation d'énergie affichée initialement configuré pour,

- si une différence de SOE entre la valeur de SOE courante et la valeur de SOE stockée excède la plage de différence prédéfinie, déterminer une consommation d'énergie cible du véhicule électrique comme étant une consommation d'énergie d'affichage initial, dans lequel la consommation d'énergie cible est le rapport de la valeur théorique de la quantité d'électricité de la batterie du véhicule électrique sur l'autonomie de conduite maximum du véhicule électrique ; et
- si la différence de SOE entre la valeur de SOE courante et la valeur de SOE stockée est à l'intérieur de la plage de différence, déterminer une consommation d'énergie moyenne qui a été stockée avant l'arrêt du fonctionnement sous alimentation électrique de dernière fois du véhicule électrique comme étant la consommation d'énergie d'affichage initial ;

un module de comparaison (602) configuré pour comparer la valeur de SOE courante et une valeur de SOE stockée, dans lequel la valeur de SOE stockée se réfère à une valeur de SOE qui a été stockée avant l'arrêt du fonctionnement sous alimentation électrique de dernière fois du véhicule électrique ;
un module de détermination d'autonomie de conduite affichée initialement (603) configuré pour,

- si la première différence entre la valeur de SOE courante et la valeur de SOE stockée excède une plage de différence prédéfinie, déterminer une autonomie de conduite d'affichage initial en fonction du rapport de la valeur de SOE courante sur la consommation d'énergie cible du véhicule électrique ; et
- si la première différence entre la valeur de SOE courante et la valeur de SOE stockée est à l'intérieur de la plage de différence, déterminer une autonomie de conduite restante réelle qui a été stockée avant l'arrêt du fonctionnement sous alimentation électrique de dernière fois du véhicule électrique comme étant l'autonomie de conduite d'affichage initial ; et

un module d'affichage (604) configuré pour afficher l'autonomie de conduite d'affichage initial et pour afficher la consommation d'énergie d'affichage initial.

9. Appareil selon la revendication 8, dans lequel l'appareil comprend en outre :

un premier module de détermination de valeur de diminution d'autonomie de conduite configuré pour, après que le véhicule électrique a été mis en fonctionnement sous alimentation électrique, lorsque le véhicule électrique est dans un état stationnaire, et chaque fois qu'une valeur de SOC d'une batterie d'alimentation électrique du véhicule électrique diminue afin de satisfaire une première condition de calcul d'autonomie de conduite, déterminer un coefficient de diminution d'autonomie de conduite en fonction d'une autonomie de conduite affichée présentement et d'une valeur de SOC courante de la batterie d'alimentation électrique, et pour déterminer une valeur de diminution d'autonomie de conduite en fonction d'une valeur de diminution de SOC de la batterie d'alimentation électrique et du coefficient de diminution d'autonomie de conduite, dans lequel la valeur de diminution de SOC se réfère à une valeur de diminution, par comparaison avec la valeur de SOC lorsque la batterie d'alimentation électrique a satisfait la première condition de calcul d'autonomie de conduite la dernière fois, de la valeur de SOC lorsque la batterie d'alimentation électrique satisfait la première condition de calcul d'autonomie de conduite cette fois ; et

un module de mise à jour d'autonomie de conduite configuré pour déterminer une autonomie de conduite mise à jour en fonction de la différence entre l'autonomie de conduite affichée présentement et la valeur de diminution d'autonomie de conduite ; et

le module d'affichage est en outre configuré pour afficher l'autonomie de conduite mise à jour.

10. Véhicule électrique (600), dans lequel le véhicule électrique comprend l'appareil pour déterminer une autonomie de conduite d'un véhicule électrique selon la revendication 8 ou 9.

11. Programme informatique, dans lequel le programme informatique comprend un code lisible par ordinateur et lorsque le code lisible par ordinateur est exécuté dans un dispositif de calcul et de traitement, le code lisible par ordinateur force le dispositif de calcul et de traitement à mettre en œuvre le procédé pour déterminer une autonomie de conduite d'un véhicule électrique selon l'une quelconque des revendications 1 à 7.

12. Support de stockage lisible par ordinateur, dans lequel le support de stockage lisible par ordinateur stocke le programme informatique selon la revendication 11.

when the electric vehicle is powered on, calculating a current virtual SOE value of the electric vehicle $\curvearrowright$ S101

comparing the current virtual SOE value and a stored virtual SOE value $\curvearrowright$ S102

if a difference between the current virtual SOE value and the stored virtual SOE value exceeds a preset difference range, determining an initially displayed endurance mileage according to the current virtual SOE value $\curvearrowright$ S103

if the difference between the current virtual SOE value and the stored virtual SOE value is within the difference range, determining an actual remaining mileage stored before the powering-off of last time of the electric vehicle to be the initially displayed endurance mileage $\curvearrowright$ S104

displaying the initially displayed endurance mileage $\curvearrowright$ S105

**FIG. 1**

S201
when the electric vehicle is powered on, calculating a current virtual SOE value of the electric vehicle

S202
comparing the current virtual SOE value and a stored virtual SOE value

exceeding the preset difference range

not exceeding the preset difference range

S203
determining a target energy consumption of the electric vehicle to be an initially displayed energy consumption

S204
determining an initially displayed endurance mileage according to the current virtual SOE value

S205
determining an actual remaining mileage stored before the powering-off of last time of the electric vehicle to be the initially displayed endurance mileage

S206
determining an average energy consumption stored before the powering-off of last time of the electric vehicle to be the initially displayed energy consumption

S207
comparing the current virtual SOE value and a stored virtual SOE value

**FIG. 2**

when the electric vehicle is powered on, calculating a current virtual SOE value of the electric vehicle ～S101

comparing the current virtual SOE value and a stored virtual SOE value ～S102

if a difference between the current virtual SOE value and the stored virtual SOE value exceeds a preset difference range, determining an initially displayed endurance mileage according to the current virtual SOE value ～S103

if the difference between the current virtual SOE value and the stored virtual SOE value is within the difference range, determining an actual remaining mileage stored before the powering-off of last time of the electric vehicle to be the initially displayed endurance mileage ～S104

displaying the initially displayed endurance mileage ～S105

when the electric vehicle is in a stationary state, and every time an SOC value of a power battery of the electric vehicle decreases to satisfy a first endurance-mileage-calculation condition, determining an endurance-mileage-decreasing coefficient according to a currently displayed endurance mileage and a current SOC value of the power battery, and determining an endurance-mileage decreasing value according to a SOC decreasing value of the power battery and the endurance-mileage-decreasing coefficient ～S301

determining an updated endurance mileage according to a difference between the currently displayed endurance mileage and the endurance-mileage decreasing value ～S302

displaying the initially displayed endurance mileage ～S303

**FIG. 3**

```
┌─────────────────────────────────┐
│ when the electric vehicle is     │  S101
│ powered on, calculating a current│
│ virtual SOE value of the         │
│ electric vehicle                 │
└─────────────────────────────────┘
              │
              ▼
┌─────────────────────────────────┐
│ comparing the current virtual    │  S102
│ SOE value and a stored virtual   │
│ SOE value                        │
└─────────────────────────────────┘
              │
              ▼
┌─────────────────────────────────┐       ┌─────────────────────────────────┐
│ if a difference between the      │  S103 │ if the difference between the    │  S104
│ current virtual SOE value and    │       │ current virtual SOE value and the│
│ the stored virtual SOE value     │       │ stored virtual SOE value is      │
│ exceeds a preset difference      │       │ within the difference range,     │
│ range, determining an initially  │       │ determining an actual remaining  │
│ displayed endurance mileage      │       │ mileage stored before the        │
│ according to the current virtual │       │ powering-off of last time of the │
│ SOE value                        │       │ electric vehicle to be the       │
│                                  │       │ initially displayed endurance    │
│                                  │       │ mileage                          │
└─────────────────────────────────┘       └─────────────────────────────────┘
              │                                          │
              ▼                                          │
┌─────────────────────────────────┐  S105               │
│ displaying the initially         │◄────────────────────┘
│ displayed endurance mileage      │
└─────────────────────────────────┘
              │
              ▼
┌─────────────────────────────────┐       ┌─────────────────────────────────┐
│ when the electric vehicle is     │  S401 │ when the electric vehicle is     │  S404
│ travelling, and if a first       │       │ travelling, and if a second      │
│ endurance-mileage filtering      │       │ endurance-mileage filtering      │
│ condition is satisfied, every    │       │ condition is satisfied,          │
│ time a travelling mileage of the │       │ determining the current actual   │
│ electric vehicle changes to      │       │ remaining mileage to be the      │
│ satisfy a second endurance-      │       │ updated endurance mileage every  │
│ mileage-calculation condition,   │       │ first preset duration            │
│ according to a difference        │       └─────────────────────────────────┘
│ between a currently displayed    │                     │
│ endurance mileage and a current  │                     │
│ actual remaining mileage and a   │                     │
│ current SOC value of a power     │                     │
│ battery of the electric vehicle, │                     │
│ determining an endurance-        │                     │
│ mileage-decreasing coefficient   │                     │
│ corresponding to the current SOC │                     │
│ value and the difference by      │                     │
│ table looking-up                 │                     │
└─────────────────────────────────┘                     │
              │                                          │
              ▼                                          │
┌─────────────────────────────────┐  S402               │
│ determining an updated endurance │                     │
│ mileage according to a difference│                     │
│ between the currently displayed  │                     │
│ endurance mileage and the        │                     │
│ endurance-mileage decreasing     │                     │
│ value                            │                     │
└─────────────────────────────────┘                     │
              │                                          │
              ▼                                          │
┌─────────────────────────────────┐  S403               │
│ displaying the updated endurance │◄────────────────────┘
│ mileage                          │
└─────────────────────────────────┘
```

FIG. 4

when the electric vehicle is powered on, calculating a current virtual SOE value of the electric vehicle — S101

comparing the current virtual SOE value and a stored virtual SOE value — S102

if a difference between the current virtual SOE value and the stored virtual SOE value exceeds a preset difference range, determining an initially displayed endurance mileage according to the current virtual SOE value — S103

if the difference between the current virtual SOE value and the stored virtual SOE value is within the difference range, determining an actual remaining mileage stored before the powering-off of last time of the electric vehicle to be the initially displayed endurance mileage — S104

displaying the initially displayed endurance mileage — S105

when the electric vehicle is charged, if a third endurance-mileage filtering condition is satisfied, every second preset duration, determining an endurance-mileage increasing value according to a target proportion and an SOC variation value within the second preset duration of the power battery — S501

determining an updated endurance mileage according to a sum of the currently displayed endurance mileage and the endurance-mileage increasing value — S502

displaying the updated endurance mileage — S503

**FIG. 5**

```
                                                          ⌒ 600
  ┌──────────────────────────────────────────────┐
  │  apparatus for determining an endurance mileage │
  │            of an electric vehicle               │
  │   ┌──────────────────────────────────────┐      │
  │   │                                      │   ⌒ 601
  │   │          calculating module          │      │
  │   │                                      │      │
  │   └──────────────────────────────────────┘      │
  │                      │                           │
  │   ┌──────────────────────────────────────┐      │
  │   │                                      │   ⌒ 602
  │   │          comparing module            │      │
  │   │                                      │      │
  │   └──────────────────────────────────────┘      │
  │                      │                           │
  │   ┌──────────────────────────────────────┐      │
  │   │  initially-displayed-endurance-mileage │  ⌒ 603
  │   │          determining module          │      │
  │   │                                      │      │
  │   └──────────────────────────────────────┘      │
  │                      │                           │
  │   ┌──────────────────────────────────────┐      │
  │   │                                      │   ⌒ 604
  │   │          displaying module           │      │
  │   │                                      │      │
  │   └──────────────────────────────────────┘      │
  └──────────────────────────────────────────────┘
```

**FIG. 6**

```
                                               ⌒ 700
  ┌─────────────────────────────────────────────────┐
  │                      ⌒ 701                        │
  │      ⌒ 702     ┌──────────────┐      ⌒ 703        │
  │  ┌──────────┐  │              │  ┌──────────┐     │
  │  │          │  │              │  │          │     │
  │  │          │  │  processor   │  │multimedia│     │
  │  │  memory  │  │              │  │ element  │     │
  │  │          │  │              │  │          │     │
  │  └────┬─────┘  └──────┬───────┘  └────┬─────┘     │
  │       ↕               ↕               ↕           │
  │───────┴───────────────┴───────────────┴──────────│
  │           ↕                   ↕                   │
  │      ⌒ 704              ⌒ 705                      │
  │  ┌──────────┐       ┌──────────────┐              │
  │  │          │       │              │              │
  │  │I/O interface│     │communication │              │
  │  │          │       │   element    │              │
  │  └──────────┘       └──────────────┘              │
  └─────────────────────────────────────────────────┘
```

**FIG. 7**

processor 1110

memory 1130

storage space 1150 for the program code      1151

program code  for implementing the steps of the
method according to the present disclosure

Computing and processing device

**FIG. 8**

storage unit for the program code

1151'

program code for implementing the steps of the
method according to the present disclosure

**FIG. 9**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016375782 A1
- US 2012116606 A1

- KR 20190122404 A